(19) **Europäisches Patentamt** / **European Patent Office** / **Office européen des brevets**

(11) **EP 4 439 228 B1**

(12) **EUROPEAN PATENT SPECIFICATION**

(45) Date of publication and mention
of the grant of the patent:
**13.05.2026 Bulletin 2026/20**

(21) Application number: **22899084.2**

(22) Date of filing: **25.11.2022**

(51) International Patent Classification (IPC):
*G06F 1/16* (2006.01)    *G05B 19/04* (2006.01)
*G09G 3/00* (2006.01)

(52) Cooperative Patent Classification (CPC):
**G06F 1/1652; G06F 1/1624; G06F 1/1677**

(86) International application number:
**PCT/KR2022/018835**

(87) International publication number:
**WO 2023/096402 (01.06.2023 Gazette 2023/22)**

(54) **ELECTRONIC DEVICE COMPRISING FLEXIBLE DISPLAY AND CONTROL METHOD THEREOF**

ELEKTRONISCHE VORRICHTUNG MIT FLEXIBLER ANZEIGE UND STEUERUNGSVERFAHREN
DAFÜR

DISPOSITIF ÉLECTRONIQUE COMPRENANT UNE UNITÉ D'AFFICHAGE FLEXIBLE ET SON
PROCÉDÉ DE COMMANDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.11.2021 KR 20210164009**

(43) Date of publication of application:
**02.10.2024 Bulletin 2024/40**

(73) Proprietor: **Samsung Electronics Co., Ltd.**
**Suwon-si, Gyeonggi-do 16677 (KR)**

(72) Inventors:
• **CHO, Hyoungtak**
**Suwon-si Gyeonggi-do 16677 (KR)**
• **KANG, Hyunggwang**
**Suwon-si Gyeonggi-do 16677 (KR)**

• **KWAK, Myunghoon**
**Suwon-si Gyeonggi-do 16677 (KR)**
• **KIM, Junhyuk**
**Suwon-si Gyeonggi-do 16677 (KR)**
• **JEONG, Hoyoung**
**Suwon-si Gyeonggi-do 16677 (KR)**
• **HEO, Changryong**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
KR-A- 20130 099 472    KR-A- 20170 027 163
KR-A- 20210 119 283    KR-B1- 102 247 663
US-A1- 2012 306 910    US-A1- 2019 371 214
US-A1- 2021 208 552

**Description**

[Technical Field]

Various embodiments of the present invention relate to an electronic device including a flexible display and a method for controlling the same.

[Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

US 2021/208552 Al discloses a display apparatus including a housing, a display configured to protrude out from the housing along a vertical axis, a lifting device configured to raise and to lower the display along the vertical axis with respect to the housing, and a position sensor disposed inside the housing and configured to sense a distance in which an upper portion of the display is moved along the vertical axis. The position sensor includes a first position sensor and a second position sensor spaced apart along a horizontal axis. The first position sensor and the second position sensor simultaneously sense a distance by which the display is raised.

[Detailed Description of the Invention]

[Technical Problem]

When driving a flexible display to slide in and out of an electronic device (e.g., a slidable device) by a driving module (e.g., a motor), the electronic device may be driven inefficiently in light of current consumption due to inability of actively controlling the drive force (e.g., torque) of the driving module. For example, as the driving module is controlled with much larger drive force than that required to slide out the flexible display, the efficiency of the driving module may deteriorate, resulting in an increase in the battery consumption of the electronic device.

According to an embodiment of the present invention, there may be provided an electronic device that may save battery consumption of the electronic device and increase the efficiency of a driving module included in the electronic device by controlling the drive force of the driving module based on a drive obstructive force of the electronic device (e.g., the creep force of the display and/or mechanism friction force between various mechanism structures included in the electronic device and the repulsive force of the display).

According to various embodiments of the present invention, there may be provided a method for controlling an electronic device that may save battery consumption of the electronic device and increase the efficiency of a driving module included in the electronic device by controlling the drive force of the driving module based on a drive obstructive force of the electronic device (e.g., the creep force of the display and/or mechanism friction force between various mechanism structures included in the electronic device and the repulsive force of the display).

[Technical Solution]

The present invention is defined by the appended set of claims. Preferred embodiments are defined by the dependent claims. An electronic device according to various embodiments of the present invention may comprise a driving module, a flexible display, and at least one processor. The at least one processor may be configured to detect a slide-out event for sliding out the flexible display, determine, in a different manner, a drive force of the driving module for each of a plurality of sections predetermined for the flexible display based on a drive obstructive force in response to the detected slide-out event, and slide out the flexible display based on the determined drive force.

A method for controlling an electronic device according to various embodiments of the present invention may comprise detecting a slide-out event for sliding out a flexible display of the electronic device, determining, in a different manner, a drive force of the electronic device corresponding to each of a plurality of sections predetermined for the flexible display based on a drive obstructive force, based on the detected slide-out event, and sliding out the flexible display based on the determined drive force.

[Advantageous Effects]

According to various embodiments of the present invention, there may be provided an electronic device that may save battery consumption of the electronic device and increase the efficiency of a driving module included in the electronic device by controlling the drive force of the driving module based on a drive obstructive force of the electronic device (e.g., the creep force of the display and/or mechanism friction force between various mechanism structures included in the electronic device and the repulsive force of the display).

The effects set forth herein are not limited thereto, and it is apparent to one of ordinary skill in the art that various effects may be disclosed herein.

[Brief Description of Drawings]

FIG. 1 is a view illustrating an electronic device in a network environment according to various embodiments;

FIG. 2 is an example view illustrating an electronic device transformable in association with a display according to various embodiments of the disclosure;

FIG. 3A is an example view illustrating an electronic device including a structure capable of extending and/or contracting a display (e.g., a flexible display) in left/right directions according to various embodiments of the disclosure;

FIG. 3B is an example view illustrating an electronic device including a structure capable of extending and/or contracting a display (e.g., a flexible display) in upper/lower directions according to various embodiments of the disclosure;

FIG. 3C is an example view illustrating an electronic device including a plurality of structures capable of extending and/or contracting a display (e.g., a flexible display) according to various embodiments of the disclosure;

FIG. 3D is a view illustrating an example of an electronic device including a structure capable of reciprocating clockwise/counterclockwise at least a portion of a display (e.g., a flexible display) according to various embodiments of the disclosure;

FIG. 4 is an example view illustrating a function or operation of controlling a driving module by determining a drive force of the driving module according to an extension length of a flexible display according to various embodiments of the present invention;

FIG. 5 is an example view illustrating a drive obstructive force according to a standstill time of an electronic device, according to various embodiments of the present invention;

FIGS. 6A and 6B are example views illustrating a plurality of sections according to various embodiments of the present invention;

FIG. 7 is an example view illustrating a function or operation of controlling a drive force of a driving module in a first section according to various embodiments of the present invention;

FIG. 8A is an example view illustrating a relationship between a duty ratio (e.g., duty rate or duty cycle) of a control signal applied to a driving module for controlling (e.g., driving) the driving module and a motor current according to various embodiments of the present invention;

FIG. 8B is an example view illustrating a function or operation of controlling a driving module according to a first correction drive force with a safety coefficient applied to a first minimum drive force in a first section according to various embodiments of the present invention;

FIG. 8C is an example view illustrating a function or operation of controlling a driving module according to a first minimum drive force without a safety coefficient applied to a first minimum drive force in a first section according to various embodiments of the present invention;

FIG. 9 is an example view illustrating a function or operation of controlling a drive force of a driving module in a second section according to various embodiments of the present invention;

FIG. 10A is an example view illustrating a function or operation of determining a ratio for reducing a duty ratio of a driving module according to a second correction drive force with a safety coefficient applied to a maximum drive force in a third section according to various embodiments of the present invention;

FIG. 10B is an example view illustrating a function or operation of determining a ratio for reducing a duty ratio of a driving module according to a drive force without a safety coefficient applied to a maximum drive force in a third section according to various embodiments of the present invention;

FIG. 10C is an example view illustrating a function or operation of reducing a duty ratio of a driving module in a second section based on a ratio for reducing a determined duty ratio according to various embodiments of the present invention;

FIG. 11 is an example view illustrating a function or operation of controlling a drive force of a driving module in a third section according to various embodiments of the present invention;

FIG. 12 is an example view illustrating a function or operation of determining a drive force depending on whether a slide-out speed of a flexible display is a threshold speed or less in a third section according to various embodiments of the present invention;
FIGS. 13A and 13B are example views illustrating a function or operation of controlling a drive force of a driving module when a plurality of sections are pre-determined as two sections according to various embodiments of the present invention; and
FIG. 14 is an example view illustrating a method for operating an electronic device 200 according to various embodiments of the present invention.

[Mode for Carrying out the Invention]

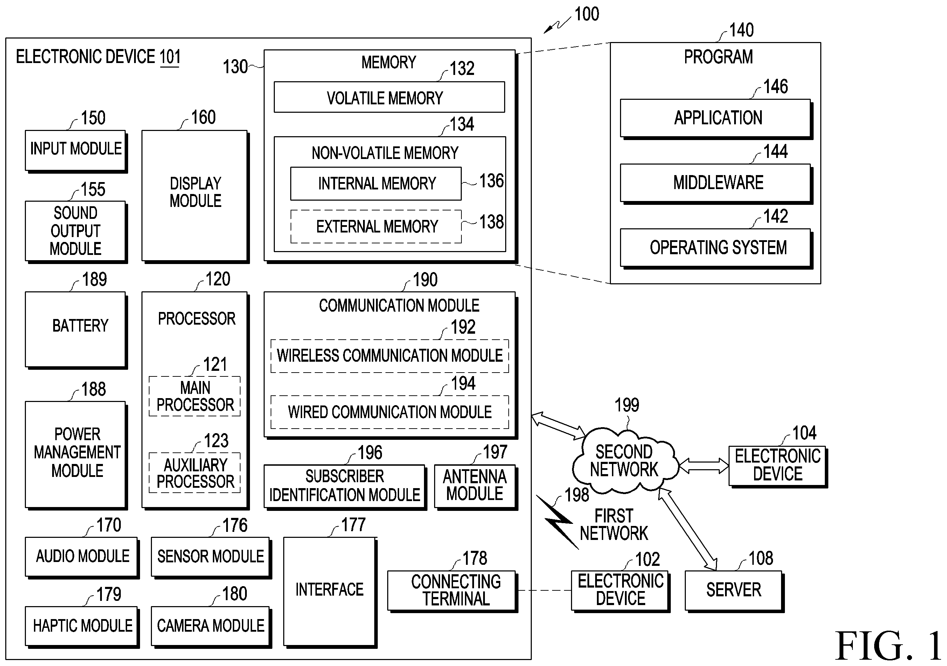

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

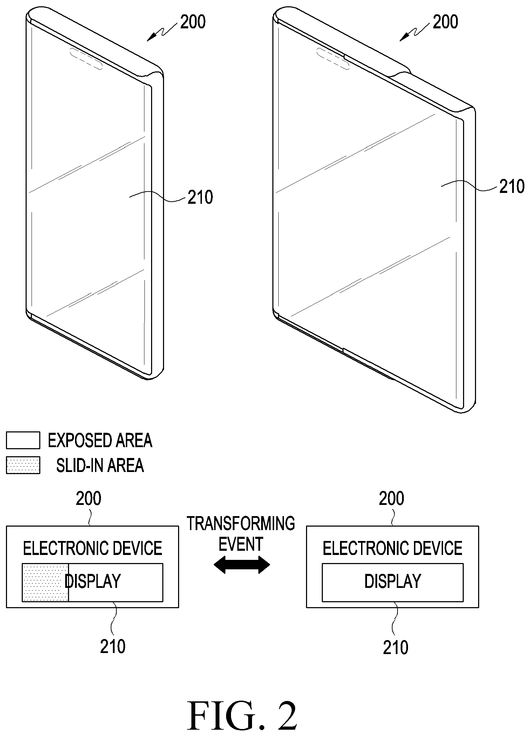

FIG. 2 is a view illustrating an example of an electronic device 200 (e.g., the electronic device 101 of FIG. 1) transformable in association with a display 210 according to various embodiments.

According to various embodiments, referring to FIG. 2, the electronic device 200 may be transformed in association with at least one display 210 provided in the electronic device 200. Transformation in association with the display 210 may mean a change in the area of the display 210 exposed to the outside of the electronic device 200 and a change in the area slid (or disposed) in the electronic device 200. For example, the area of the display 210 exposed to the outside of the electronic device 101 may be extended (or increased), and/or the area of the display 210 exposed to the outside may be shrunken (or decreased). Alternatively, the area of the display 210 slid in the electronic device 200 may be increased and/or the area of the display 210 slid in the electronic device 200 may be decreased. The area exposed to the outside may be defined as an area of the display 210 exposed to the outside of a housing (or cover) for forming the exterior of the electronic device 200 (or surrounding the inside of the electronic device 200), and the area slid in (or received in) may be defined as an area disposed in the inner space of the electronic device 200, formed by the housing (or cover). The housing (or cover) forming the exterior of the electronic device 200 may be implemented in a form in which a single housing or a plurality of housings are combined.

According to various embodiments, the electronic device 200 may include a structure for transforming the electronic device 200 in association with at least one display 210. The structure may be understood as a concept including a structure having a specific shape, implemented (or provided) in the electronic device 200 (e.g., an inner structure including a shape (e.g., having curvature at a portion contacted by the display 210) for guiding (or supporting) the display 210, a housing having an inlet for sliding out the slid-in area of the display 210 and/or sliding in the externally exposed area), members (e.g., rollers), and an electronic component (e.g., a motor). For example, the structure may be implemented to be able to reciprocate linearly in various directions (e.g., left/right directions, upper/lower directions, or diagonal direction) on a 2D plane and/or reciprocate in various rotational directions (e.g., clockwise/counterclockwise). As another example, the structure may be implemented to allow the area of the display 210, received in the electronic device 200, to be wound multiple times.

According to various embodiments, when an event for transformation occurs, the electronic device 200 may be transformed in association with the display 210. The event for transformation may include applying a physical force to slide out the display 210 by the user (e.g., a portion of the display 210 is pulled in a specific direction) and/or identifying an input for driving electronic components (e.g., a motor) for sliding out the display 210.

Meanwhile, although it is illustrated that the electronic device 200 includes one display 210, the electronic device 200 may include a plurality of displays and be transformed in association with at least some of the plurality of displays.

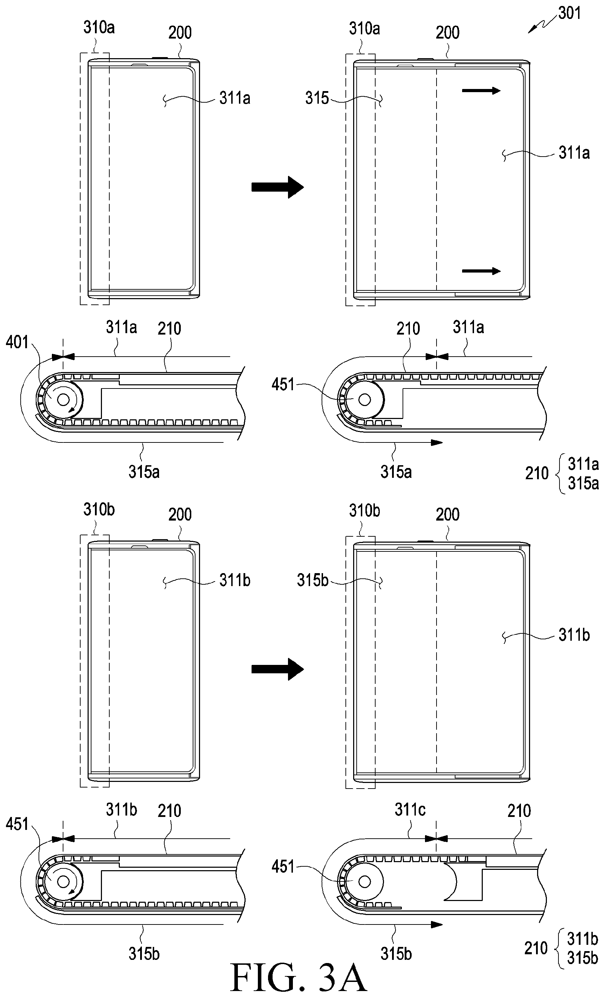

Described below are examples of the electronic device including a structure capable of reciprocating the display described in connection with FIG. 2, with reference to FIGS. 3A to 3D. Meanwhile, without limited to the examples of the electronic device 200 described below, various embodiments may apply to electronic devices 200 including various structures capable of changing the externally exposed area and/or slid-in area of the display 210.

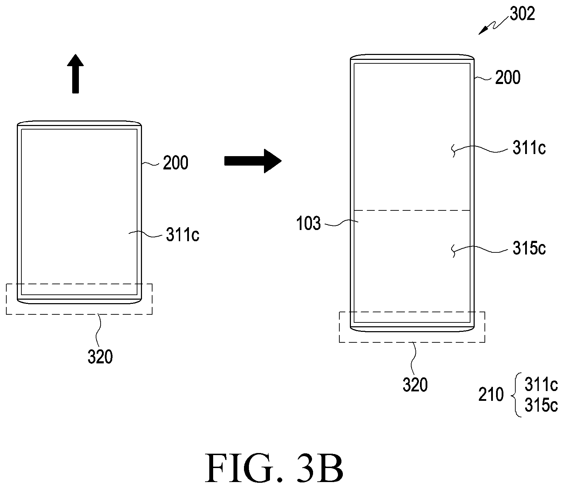

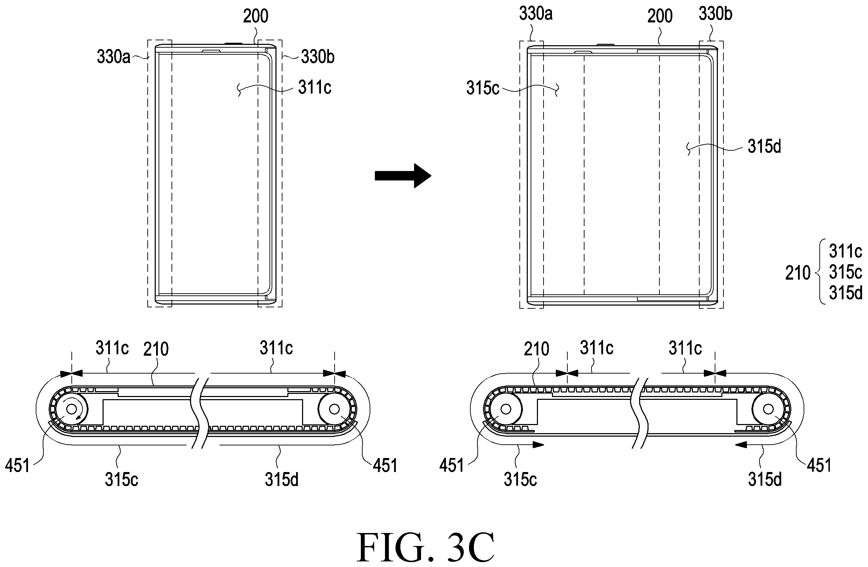

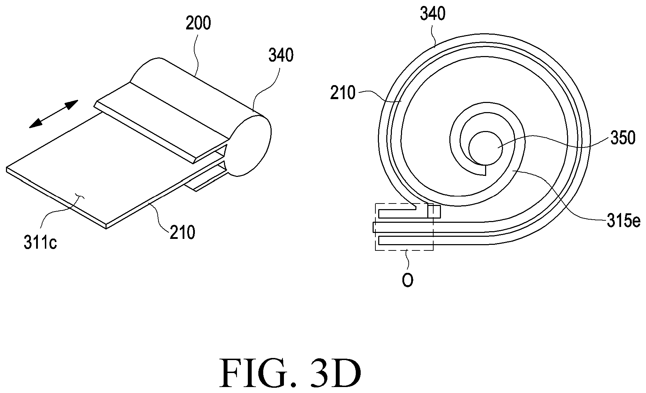

FIG. 3A is a view illustrating examples of an electronic device 200 including a structure capable of extending and/or contracting a display 210 (e.g., a flexible display) in left/right directions according to various embodiments. FIG. 3B is a view illustrating an example of an electronic device 200 including a structure capable of extending and/or contracting a display 210 (e.g., a flexible display) in upper/lower directions according to various embodiments. FIG. 3C is a view illustrating an example of an electronic device 200 including a plurality of structures capable of extending and/or contracting a display 210 (e.g., a flexible display) according to various embodiments. FIG. 3D is a view illustrating an example of an electronic device 200 including a structure for winding or unwinding clockwise/counterclockwise at least a portion of a display 210 (e.g., a flexible display) according to various embodiments.

According to various embodiments, as shown in FIGS. 3A and 3B, the electronic device 200 may include a structure capable of extending and/or contracting the externally exposed area of the flexible display 210 in the left/right directions or upper/lower directions. For example, the electronic device 200 may include a display 210 (e.g., a flexible display), a structure (or housing) (e.g., the first structure 401 described below) disposed in a partial area 311a, 311b, and 311c of the display 210 and implemented in the electronic device 200 to be reciprocatable, and a rotating member (e.g., the roller 451 described below). The electronic device 200 may include an inlet structure in a portion (e.g., left portions 310a and 310b or right portions (not shown), and upper portions (not shown) or lower portions (not shown)) to allow the remaining portions 315a, 315b, and 315c of the flexible display 210, positioned in the electronic device 200, to be slid out or after slid out, slid back in.

In an embodiment, referring to 301 of FIG. 3A, the electronic device 200 may be implemented to include a structure for extending and/or contracting the externally exposed area of the flexible display 210 in the left/right directions as the flexible display 210, along with the structure (e.g., the first structure 401 described below), is moved. For example, referring to 301 of FIG. 3A, as the structure (e.g., the first structure 401 described below) is reciprocated (e.g., reciprocation in the left and right directions) based on the rotation of the roller 451, a portion of the flexible display 210 disposed on the structure is also moved, so that the portion 315a of the flexible display 210 may be slid out and/or in through the inlet formed in a portion (e.g., the left portion 310a or right portion (not shown) of the electronic device 200) of the electronic device 200. As is described below, the rotation of the roller 451 may be performed by a moving device (e.g., a motor or a shape memory alloy). The moving direction of the structure or the display 210 may be defined as an extending direction or a contracting direction. For example, when the structure (or flexible display 210) is slid out in a first direction (e.g., the right direction), and the area of the flexible display 210, exposed to the outside of the electronic device 200, is extended (or increased), the first direction may be defined as the extending direction. As another example, as the flexible display 210 is slid in, the area of the flexible display 210, received in the electronic device 200, may be reduced (or shrunken). As an example, the extending direction shown in 301 of FIG. 3A may be the right direction.

In an embodiment, referring to 302 of FIG. 3B, the electronic device 200 may be implemented to include a structure for extending and/or contracting the externally exposed area of the flexible display 210 in the left/right directions as the structure (e.g., the first structure 401 described below) is moved. For example, referring to 302 of FIG. 3A, as the structure (e.g., the first structure 401 described below) is reciprocated (e.g., reciprocation in the left and right directions) based on the rotation of the roller 451, the portion 315a of the flexible display 210 may be slid out and/or in through the inlet formed in a portion (e.g., the left portion 310a or right portion (not shown) of the electronic device 200) of the electronic device 200. The direction from a fixed portion (e.g., a portion of the externally exposed area 311b) of the flexible display 210 to the portion (e.g., the left portion 310b) in which the area of the flexible display 210 is extended may be defined as an extending direction. Conversely, the direction from the portion (e.g., the left portion 310b) in which the area of the flexible display 210 is shrunken to the fixed portion (e.g., a portion of the externally exposed area 311b) of the flexible display 210 may be defined as a contracting direction. As an example, the extending direction shown in 302 of FIG. 3A may be the left direction.

In an embodiment, referring to FIG. 3B, the electronic device 200 may be implemented to include a structure for extending and/or contracting the externally exposed area of the flexible display 210 in the upper/lower directions as the flexible display 210, along with the structure (e.g., the first structure 401 described below), is moved. As the structure (e.g., the first structure 401 described below) is reciprocated (e.g., reciprocation in the upper and lower directions) based on the rotation of the roller 451, a portion of the flexible display 210 disposed on the structure is also moved, so that the portion 315c of the flexible display 210 may be slid out and/or in through the inlet formed in a portion (e.g., the lower portion 320 of the electronic device 200) of the electronic device 200.

Meanwhile, without limited to those described and/or shown, instead of the roller 451, a structure having a shape (e.g., a shape having a predetermined curvature to support the rounded area of the flexible display 210) to support the slide-in and/or out of the flexible display 210 may be disposed. Further, without limited to those described and/or shown, the display 210 may be implemented as a rigid display 210, rather than the flexible display 210 receivable in the electronic device 200 with a portion thereof rounded, and the housing of the electronic device 200 may be implemented in such a manner that portions 315a, 315b, and 315c of the electronic device 200 are receivable in the electronic device without being rounded.

According to various embodiments, as shown in FIG. 3C, the electronic device 200 may have a structure that allows the flexible display 210 be slid in or slid out at at least two or more portions. For example, the electronic device 200 may include the flexible display 210, structures (or housing) where the flexible display 210 is disposed and each of which is reciprocatable in one direction, and moving members (e.g., rollers 451). At least a portion 311d of the flexible display 210 may be exposed to the outside of the electronic device 200, and the remaining portions 315d may be rounded and received in the electronic device 200. Referring to FIG. 3C, a portion (e.g., the left portion 330a of the electronic device 200) and another portion (e.g., the right portion 330b of the electronic device 200) of the electronic device 200 may have inlets through which the remaining portions 315d of the flexible display 210 may be slid in and/or slid out. Based on the rotation of each of the rollers 451, the first structure and the second structure each may be reciprocated (e.g., reciprocation in the left and right directions) and, by the reciprocations, the remaining portions 315d of the flexible display 210 may be slid in and/or slid out through each of the inlets formed in the portion (e.g., the left portion 330a of the electronic device 200) and the other portion (e.g., the right portion 330b of the electronic device 200) of the electronic device 200. As the portions 315d of the flexible display 210 is slid out, the area of the flexible display 210, exposed to the outside of the electronic device 200, may increase and, as the portions 315d of the flexible display 210 is slid in, the area of the flexible display 210, received in the electronic device 200, may decrease. Meanwhile, without limited to those described and/or shown, instead of the roller 451, a structure having a shape (e.g., a shape having a predetermined curvature to support the rounded area of the flexible display 210) to support the slide-in and/or out of the flexible display 210 may be disposed. Further, without limited to those described and/or shown, the display 210 may be implemented as a rigid display 210, rather than the flexible display 210 receivable in the electronic device 200 with a portion thereof rounded, and the housing of the electronic device 200 may be implemented in such a manner that a portion 315d of the electronic device 200 are receivable in the electronic device without being rounded.

According to various embodiments, as shown in FIG. 3D, the electronic device 200 may include a structure that allows the portion of the flexible display 210, slid in the electronic device 200, to be wound multiple times, and allows the portion, wound multiple times, to be slid out. For example, referring to FIG. 3D, the electronic device 200 may include the flexible display 210 and a housing 340 where at least a portion 315e of the flexible display 210 may be wound multiple times and slid in. A portion of the housing 340 may include an inlet O where at least the portion 315e of the flexible display 210, wound multiple times, may be slid out. As the portions of the flexible display 210 are slid out (e.g., operation of the moving device 350 (e.g., a motor)), the area of the area 311e of the flexible display 210, exposed to the outside of the electronic device 200, may increase and, as the portion 315e of the flexible display 210 is slid in, the area of the flexible display 210, received in the electronic device 200, may increase. Various embodiments of the disclosure are described based on the electronic device 200 illustrated at an upper side of FIG. 3A, but various embodiments of the disclosure are not limited thereby. For example, it will be appreciated by one of ordinary skill in the art that various embodiments of the disclosure are applicable to various types of electronic devices 200 illustrated in the disclosure.

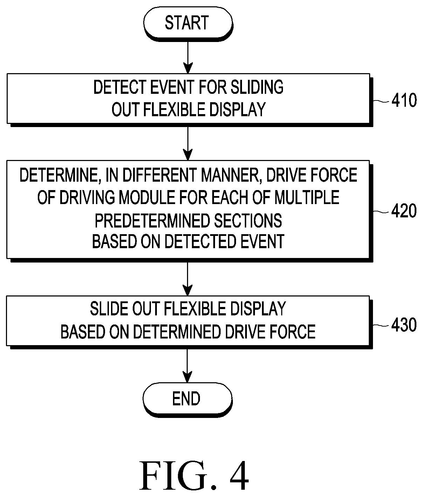

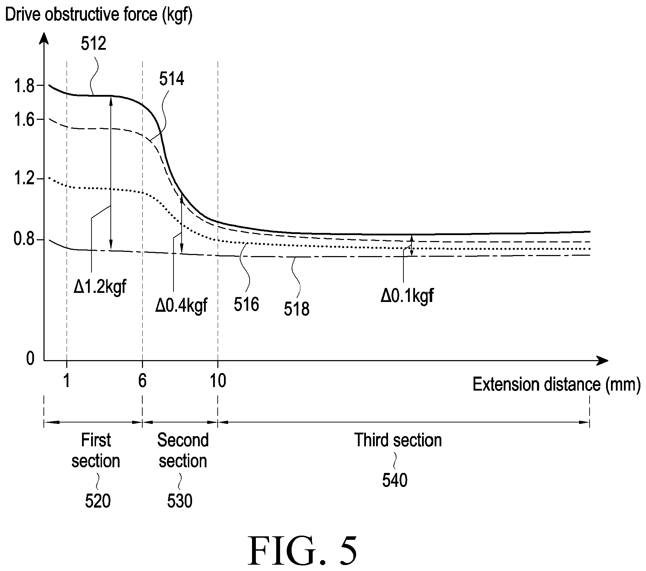

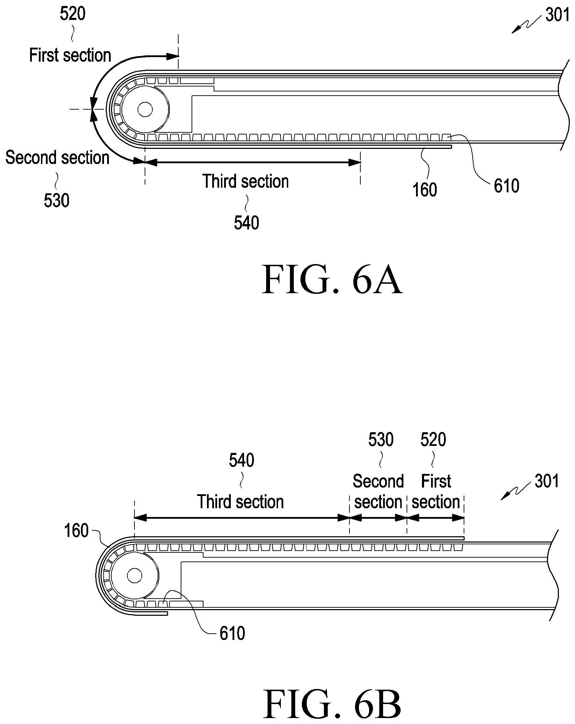

FIG. 4 is an example view illustrating a function or operation of controlling a driving module by determining a drive force of the driving module according to an extension length of a flexible display according to various embodiments of the present invention. FIG. 5 is an example view illustrating a drive obstructive force according to a standstill time of an electronic device, according to various embodiments of the present invention. FIGS. 6A and 6B are example views illustrating a plurality of sections according to various embodiments of the present invention.

Referring to FIG. 4, according to an embodiment, the electronic device 200 (e.g., the processor 120 of the electronic device 101 of FIG. 1) may detect an event for sliding out the display module 160 (e.g., the flexible display) in operation 410. The event according to various embodiments of the present invention may include, e.g., various events such as reception of a selection input for a button (e.g., a virtual button or a physical button) for sliding out the display module 160 and/or reception of an execution request of a specific application. The electronic device 200 mentioned herein may refer to an electronic device having a flexible display.

In operation 420, the electronic device 200 according to various embodiments of the present invention may determine the drive force of the driving module in a different manner for each of the plurality of predetermined sections, based on the detected event. Operation 420 according to various embodiments of the present invention may be performed while the display module 160 slides out according to the event according to operation 410. The plurality of predetermined sections according to various embodiments of the present invention may be determined based on the drive obstructive force for the electronic device 200. The drive obstructive force according to various embodiments of the present invention may include, e.g., a display repulsive force, which is a force for restoring the display module 160 to its original state (e.g., a flat state), a mechanism friction force, which is a force generated when various mechanisms included in the electronic device 200 come into contact with each other, and/or a display creep force, which is a deformation force generated when a material (e.g., a pressure sensitive adhesive (PSA)) performing a function for bonding the layers of the display module 160 is solidified. FIG. 5 illustrates an example of a drive obstructive force according to a standstill time (e.g., a time when the display module 160 is left completely pulled out) of the electronic device 200 according to various embodiments of the present invention. For example, when the electronic device 200 has a substantially 20-minute standstill time (e.g., the first graph 512), the electronic device 200 may have a drive obstructive force greater than when the electronic device 200 has a substantially 15-minute standstill time (e.g., the second graph 514) according to the drive obstructive force (e.g., the display creep force). Similarly, when the electronic device 200 has a substantially 5-minute standstill time (e.g., the third graph 516), the electronic device 200 may have a drive obstructive force greater than when the electronic device 200 does not substantially have a standstill time (e.g., the fourth graph 518) according to the drive obstructive force (e.g., the display creep force). Referring to FIG. 5, the deviation of the drive obstructive force between when the electronic device 200 has a substantially 20-minute standstill time (e.g., the first graph 512) and when the electronic device 200 does not substantially have a standstill time (e.g., the fourth graph 518) may gradually decrease (e.g., decrease from 1.2 kgf to 0.1 kgf) depending on the extension distance (e.g., slide-out length). With respect to the display module 160 according to various embodiments of the present invention, a plurality of sections may be predetermined. FIGS. 6A and 6B illustrate an embodiment where predetermined sections for the display module 160 include three sections (e.g., the first section 520, the second section 530, and the third section 540). As illustrated in FIGS. 6A and 6B, the first section 520 according to various embodiments of the present invention may be a section (e.g., a section of 0 mm to 6 mm) including a predetermined length (e.g., about 6 mm) from a portion (e.g., a portion where support of the display module 160 by the multiple bars 610 starts) where the display module 160 starts to slide out in the state where the electronic device 200 is completely closed. Since the first section 520 according to various embodiments of the present invention includes a section where the display module 160 in the bent state is switched to the flat state, the first section 520 may be most affected by the creep force of the display. The third section 540 according to various embodiments of the present invention may be the section (e.g., a section of substantially 11 mm to 35 mm) where the electronic device 200 is in the flat state without being exposed to the outside in the completely closed state. In the third section according to various embodiments of the present invention, as the electronic device 200 is changed to the open state, the display module 160 in the flat state passes through the bent portion of the electronic device 200 but is changed back to the flat state, and thus the display creep force may be less affected than in the first section 520. The second section 530 according to various embodiments of the present invention may be a section (e.g., a section of substantially 6 mm to 11 mm) where a change in the drive obstructive force according to various embodiments of the present invention is greater than that in the first section 520 and the third section 540. The first section 520 according to various embodiments of the present invention may be a section where a difference in display creep force occurs according to the standstill time of the electronic device 200. The second section 530 according to various embodiments of the present invention may be a section where the rate of change of the drive obstructive force is relatively greater than those of other sections. The third section 540 according to various embodiments of the present invention may be a section where the drive obstructive force (e.g., the mechanical friction force) is relatively constant compared to other sections. The first section 520, the second section 530, and the third section 540 according to various embodiments of the present invention may be predetermined in the manufacturing process of the electronic device 200 based on the actually measured drive obstructive force. However, according to various embodiments of the present invention, the first section 520, the second section 530, and the third section 540 according to various embodiments of the present invention may be determined by the user's settings. The three sections divided according to various embodiments of the present invention are illustrative, and the sections for the display module 160 may be determined as two sections or four sections. A method for determining the drive force of each of the first section 520 to the third section 540 according to various embodiments of the present invention is described below in greater detail.

In operation 430, the electronic device 200 according to various embodiments of the present invention may slide out the display module 160 (e.g., a flexible display), based on the drive force determined in operation 420. For example, the electronic device 200 according to various embodiments of the present invention may slide out the display module 160 according to a drive force with a predesignated rate (which may also be referred to as a "safety coefficient" in the disclosure) applied to the drive obstructive force at the time when the slide-out of the display module 160 starts, e.g., in the first section 520. The electronic device 200 according to various embodiments of the present invention may slide out the display module 160 in the second section 530 based on a drive force that is continuously or stepwise reduced as the display module 160 slides out. The electronic device 200 according to various embodiments of the present invention may slide out the display module 160 according to the drive force (e.g., the drive force at the time when the second section 530 ends) determined based on the maximum drive obstructive force of the third section 540 in the third section 540.

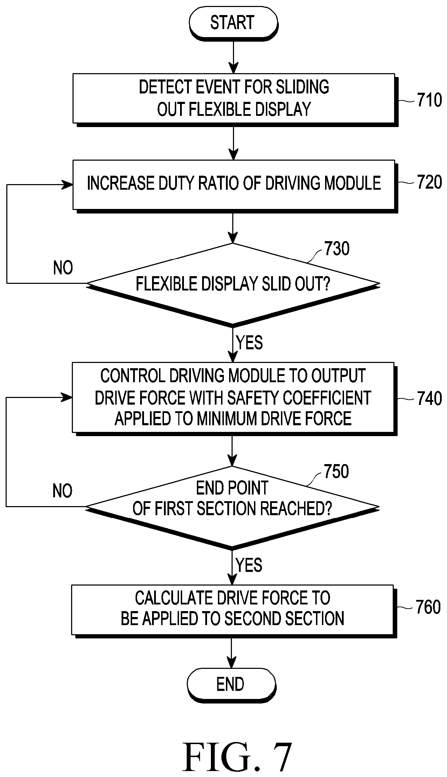

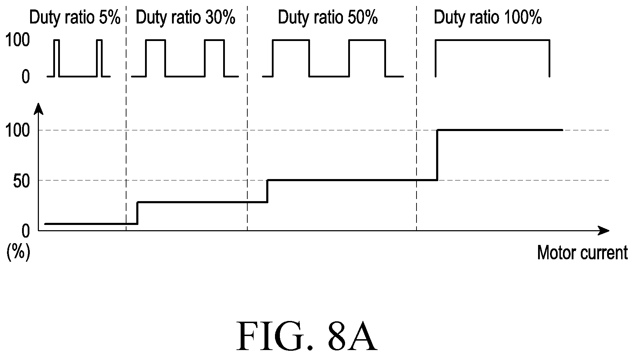

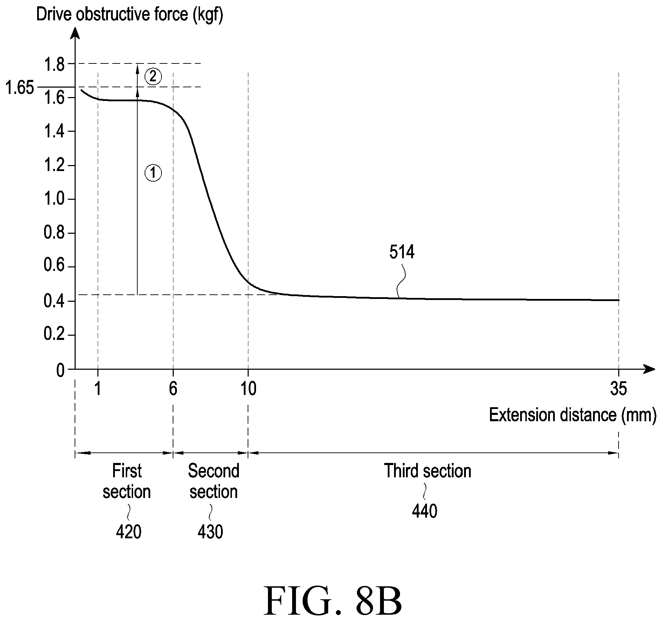

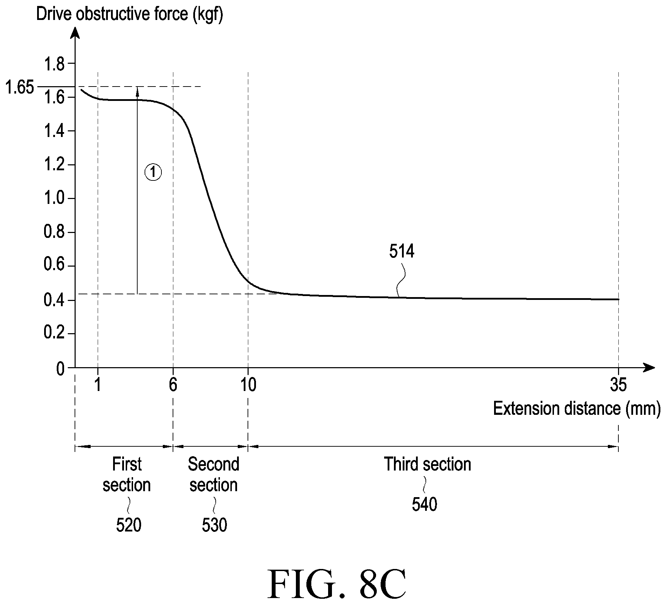

FIG. 7 is an example view illustrating a function or operation of controlling a drive force of a driving module in a first section 520 according to various embodiments of the present invention. FIG. 8A is an example view illustrating a relationship between a duty ratio (e.g., duty cycle) of a control signal applied to a driving module for controlling (e.g., driving) the driving module and a motor current according to various embodiments of the present invention. FIG. 8B is an example view illustrating a function or operation of controlling a driving module according to a first correction drive force with a safety coefficient applied to a first minimum drive force in a first section 520 according to various embodiments of the present invention. FIG. 8C is an example view illustrating a function or operation of controlling a driving module according to a first minimum drive force without a safety coefficient applied to a first minimum drive force in a first section 520 according to various embodiments of the present invention.

Referring to FIG. 7, in operation 710, the electronic device 200 according to various embodiments of the present invention may detect an event for sliding out the display module 160 (e.g., a flexible display). The event according to various embodiments of the present invention may include, e.g., various events such as reception of a selection input for a button (e.g., a virtual button or a physical button) for sliding out the display module 160 and/or reception of an execution request of a specific application.

The electronic device 200 according to various embodiments of the present invention may increase the duty ratio of the driving module in operation 720. As illustrated in FIG. 8A, as the duty ratio applied to the driving module according to various embodiments of the present invention increases, the current of the driving module may increase. Further, as the duty ratio applied to the driving module according to various embodiments of the present invention increases, the drive force (e.g., torque) of the driving module may increase. According to various embodiments of the present invention, as illustrated in FIG. 8B, the duty ratio may be continuously/stepwise increased from a predetermined value based on the minimum drive obstructive force (e.g., a value to which the second graph 514 converges) of the electronic device 200. For example, when the minimum drive obstructive force of the electronic device 200 is 0.4 kgf, the duty ratio may continuously/stepwise increase according to a predetermined rate (e.g., 50%) from the duty ratio (e.g., 10%) corresponding to 0.32 kgf which is a predetermined rate (e.g., 20%) lower than the minimum drive obstructive force of the electronic device 200 (section ① of Fig. 8B). However, according to various embodiments of the present invention, the duty ratio may continuously/stepwise increase according to the predetermined rate (e.g., 50%) from the duty ratio corresponding to 1.36 kgf which is the predetermined rate (e.g., 20%) lower than the minimum drive obstructive force (e.g., 1.7 kgf) of the first section 520. The electronic device 200 according to various embodiments of the present invention may identify the standstill time of the electronic device 200 to determine the minimum drive obstructive force of the electronic device 200. The electronic device 200 according to various embodiments of the present invention may determine whether to determine the minimum drive obstructive force of the electronic device 200 based on any graph among the plurality of graphs illustrated in FIG. 5, using a lookup table where a relationship between the standstill time and the drive obstructive force is defined. For example, when the standstill time of the electronic device 200 is 0 minutes to less than 5 minutes, the fourth graph 518 may be selected, and when the standstill time of the electronic device 200 is 20 minutes or more, the first graph 512 may be selected.

According to various embodiments of the present invention, in order to determine a duty ratio corresponding to a specific drive force or a drive obstructive force, the following lookup table where a relationship between the drive force or the drive obstructive force and the duty ratio is defined may be stored. The electronic device 200 according to various embodiments of the present invention may determine a duty ratio corresponding to a specific drive force using Table 1 below.

[Table 1]

| Duty ratio (%) | Drive force (kgf) | Speed (RPM) | Current (at 8V) (A) |
|---|---|---|---|
| 100 | 3 | 7200 | 1.1 |
| 80 | 2.3 | 7200 | 0.8 |
| 60 | 1.7 | 7200 | 0.6 |
| 50 | 1.4 | 7200 | 0.5 |
| 40 | 1 | 7200 | 0.4 |
| 20 | 0.4 | 7200 | 0.2 |
| 10 | 0.32 | 7200 | 0.1 |

According to various embodiments of the present invention, the start point of the duty ratio increase in the first section 520 may be determined by the current state of the electronic device 200 (e.g., the standstill time of the electronic device 200 and/or the current temperature of the electronic device 200). For example, when the standstill time of the electronic device 200 is 10 minutes, the electronic device 200 according to various embodiments of the present invention may determine the duty ratio corresponding to the standstill time of the electronic device 200 as a start duty ratio and increase the duty ratio according to the predesignated rate (e.g., 50%). To that end, the electronic device 200 according to various embodiments of the present invention may store a lookup table where the relationship between the current state of the electronic device 200 and the duty ratio is defined. The electronic device 200 according to various embodiments of the present invention may determine the start duty ratio using the lookup table. The electronic device 200 according to various embodiments of the present invention may determine whether the display module 160 starts to slide out in operation 730. The electronic device 200 according to various embodiments of the present invention may include various sensors (e.g., a hall sensor and/or an optical sensor) for determining a slide-out length of the display module 160. A method using a hall sensor or a magnetic sensor according to various embodiments of the present invention may be a method for measuring an absolute coordinate value for a displacement of the display module 160 by measuring a change in a magnetic force of a moving magnetic body. An inductive method according to various embodiments of the present invention may be a method for determining a slide-out length of the display module 160 by detecting a change in a magnetic field. Further, various techniques for determining the slide-out length of the display module 160 may be applied to various embodiments of the present invention. The electronic device 200 according to various embodiments of the present invention may determine that the display module 160 starts to slide out when the display module 160 is moved or slid out by a predetermined length (e.g., 0.01 mm) or more.

In operation 740, the electronic device 200 according to various embodiments of the present invention may control the driving module to output the drive force with the safety coefficient applied to the minimum drive force. Referring to FIG. 8B, the minimum drive force according to various embodiments of the present invention may refer to the drive force (e.g., 1.65 kgf) at the time when the display module 160 slides out. The electronic device 200 according to various embodiments of the present invention may apply a signal (e.g., a current corresponding to a duty ratio (e.g., 65%)) according to a specific duty ratio (e.g., 65%) to the driving module so that the drive force (e.g., 1.8 kgf) with a predetermined rate (e.g., the safety coefficient) applied to the drive force (e.g., 1.65 kgf) at the time when the display module 160 slides out is output by the driving module. The drive force output by the driving module according to various embodiments of the present invention may be determined according to Equation 1 below. The predesignated rate (e.g., the safety coefficient) according to various embodiments of the present invention may be predetermined, e.g., within a range of 0% to 20%. Alternatively, the safety coefficient according to various embodiments of the present invention may be determined according to the current state (e.g., whether it is a power saving mode or a normal mode) of the electronic device 200. For example, when the current state of the electronic device 200 is set to the power saving mode, the electronic device 200 according to various embodiments of the present invention may determine the safety coefficient as a specific value of less than 10%. For example, when the current state of the electronic device 200 is set to the normal mode (e.g., a state other than the state set to the power saving mode), the electronic device 200 according to various embodiments of the present invention may determine the safety coefficient as a specific value of 10% or more.

The electronic device 200 according to various embodiments of the present invention may slide out the display module 160 in the first section 520 using the drive force (e.g., 1.8 kgf) to which the safety coefficient is applied.

[79]    [Equation 1]

$$F_c = (F_{\text{minimum drive force of driving module}}) \text{ X } (\text{safety coefficient} + 1)$$

In Equation 1, $F\alpha$ may mean the drive force of the first section 520, and $F_{\text{minimum drive force of driving module}}$ may mean the minimum drive force (e.g., 1.65 kgf) of the driving module. However, according to various embodiments of the present invention, as illustrated in FIG. 8C, the driving module may be controlled to output a drive force without the safety coefficient applied to the drive force (e.g., 1.65 kgf) at the time when the display module 160 slides out.

In operation 750, the electronic device 200 according to various embodiments of the present invention may determine whether the display module 160 reaches the end point (e.g., a point moved 6 mm from the point where the slide-out starts) of the first section. The electronic device 200 according to various embodiments of the present invention may determine whether the slide-out length of the display module 160 slides out to a length (e.g., 6 mm) corresponding to the first section 520 using various technologies mentioned in the disclosure.

In operation 760, when it is determined that the display module 160 reaches the end point (e.g., the point moved 6 mm from the point where the slide-out starts) of the first section, the electronic device 200 according to various embodiments of the present invention may calculate the drive force to be applied to the second section 530 according to various embodiments of the present invention. When it is determined that the display module 160 does not reach the end point (e.g., the point moved 6 mm from the point where the slide-out starts) of the first section, the electronic device 200 according to various embodiments of the present invention may control the driving module to extend the display module 160 in the first section 520 using the drive force to which the safety coefficient is applied.

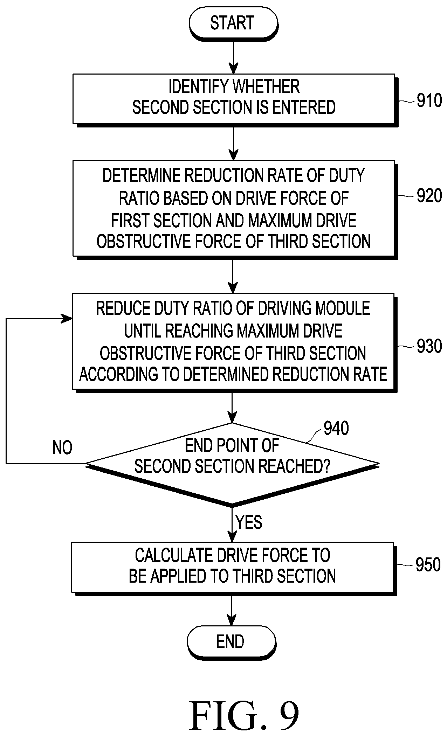

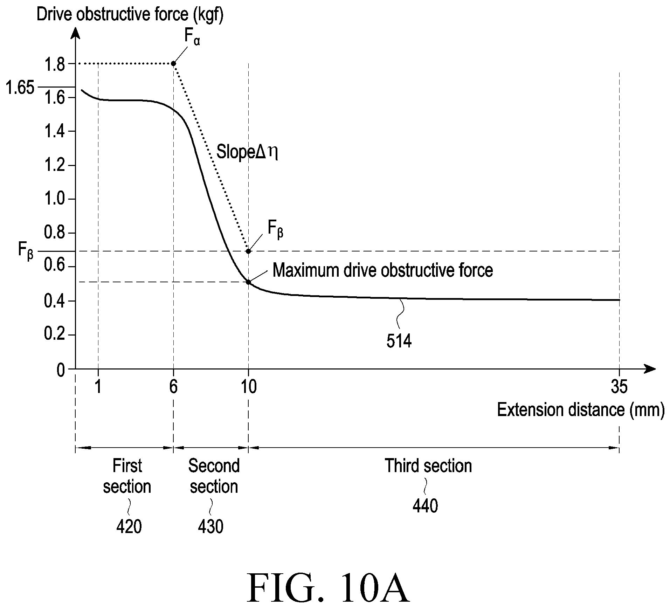

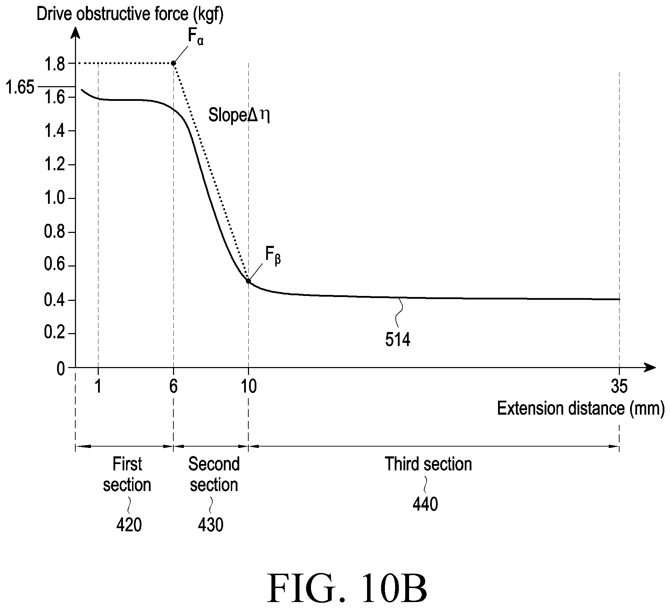

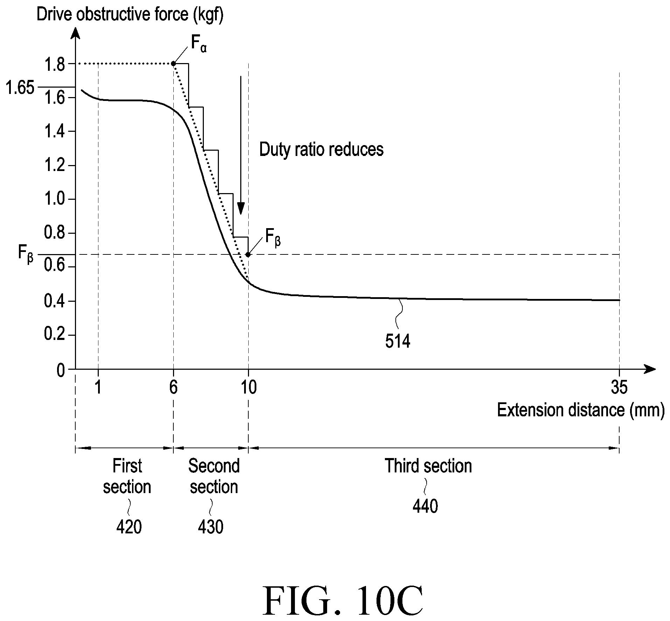

FIG. 9 is an example view illustrating a function or operation of controlling a drive force of a driving module in a second section according to various embodiments of the present invention. FIG. 10A is an example view illustrating a function or operation of determining a ratio for reducing a duty ratio of a driving module according to a second correction drive force with a safety coefficient applied to a maximum drive force in a third section according to various embodiments of the present invention. FIG. 10B is an example view illustrating a function or operation of determining a ratio for reducing a duty ratio of a driving module according to a drive force without a safety coefficient applied to a maximum drive force in a third section according to various embodiments of the present invention. FIG. 10C is an example view illustrating a function or operation of reducing a duty ratio of a driving module in a second section based on a ratio for reducing a determined duty ratio according to various embodiments of the present invention.

Referring to FIG. 9, the electronic device 200 according to various embodiments of the present invention may identify whether the display module 160 enters the second section 530 in operation 910. For example, the electronic device 200 according to various embodiments of the present invention may identify whether the display module 160 slides out by the slide-out length (e.g., about 6 mm) corresponding to the first section 520 or more.

In operation 920, the electronic device 200 according to various embodiments of the present invention may determine a reduction rate of the duty ratio, based on the drive force of the first section 520 and the maximum drive obstructive force of the third section 540. The electronic device 200 according to various embodiments of the present invention may determine the reduction rate of the duty ratio applied to the driving module using, e.g., Equation 2 below.

[Equation 2]

$$\text{Slope } \Delta\eta = (F_\alpha - F_\beta)/(d_{2 \text{ section}})$$

In Equation 2, Slope$\Delta\eta$ may mean the reduction rate of the duty ratio, d2 may mean the total length of the second section 530, $F\alpha$ may mean the drive force of the first section 520, and $F_\beta$ may mean the drive force with the safety coefficient applied to the maximum drive obstructive force. For example, referring to FIG. 10A, when the drive force of the first section 520 is 1.8 kgf, the drive force with the safety coefficient (e.g., 40%) applied to the maximum drive obstructive force (e.g., 0.5 kgf) of the third section 540 is 0.7 kgf, and the length of the second section 530 is 5 mm (e.g., 11 mm - 6 mm), the reduction rate of the duty ratio in the second section 530 may be determined to be 0.22 kgf/mm. However, as illustrated in FIG. 10B, the electronic device 200 according to various embodiments of the present invention may determine the reduction rate of the duty ratio using the maximum drive obstructive force of the third section 540 without the safety coefficient (e.g., 40%) applied to the maximum drive obstructive force (e.g., 0.5 kgf) of the third section 540.

In operation 930, the electronic device 200 according to various embodiments of the present invention may reduce the duty ratio of the driving module (e.g., the duty ratio of the control signal applied to the driving module to control the driving module) until the maximum drive obstructive force of the third section 540 (e.g., the drive obstructive force with the safety coefficient applied to the maximum drive obstructive force of the third section 540) is reached according to the reduction rate determined in operation 920. In other words, the duty ratio corresponding to $F\alpha$ may be reduced to the duty ratio corresponding to $F_\beta$ according to the determined reduction rate. For example, as illustrated in FIG. 10C, the electronic device 200 according to various embodiments of the present invention may reduce the drive force of the driving module by 0.22 kgf per 1 mm of the slide-out length of the display module 160. However, according to another embodiment of the disclosure, the driving module may be controlled to reduce the drive force of the driving module by 0.11 kgf per 0.5 mm of the slide-out length.

In operation 940, the electronic device 200 according to various embodiments of the present invention may determine whether the display module 160 reaches the end point of the second section (e.g., a point moved 11 mm from the point where the slide-out starts). The electronic device 200 according to various embodiments of the present invention may determine whether the display module 160 slides out until the slide-out length of the display module 160 becomes a length (e.g., 11 mm) corresponding to the end point of the second section 520 using various technologies mentioned in the disclosure.

In operation 950, when it is determined that the display module 160 reaches the end point of the second section (e.g., the point moved 11 mm from the point where the slide-out starts), the electronic device 200 according to various embodiments of the present invention may calculate the drive force to be applied to the third section 540 according to various embodiments of the present invention. When it is determined that the display module 160 does not reach the end point of the second section (e.g., the point moved 11 mm from the point where the slide-out starts), the electronic device 200 according to various embodiments of the present invention may continuously/stepwise reduce the duty ratio of the signal applied to the driving module according to operation 930.

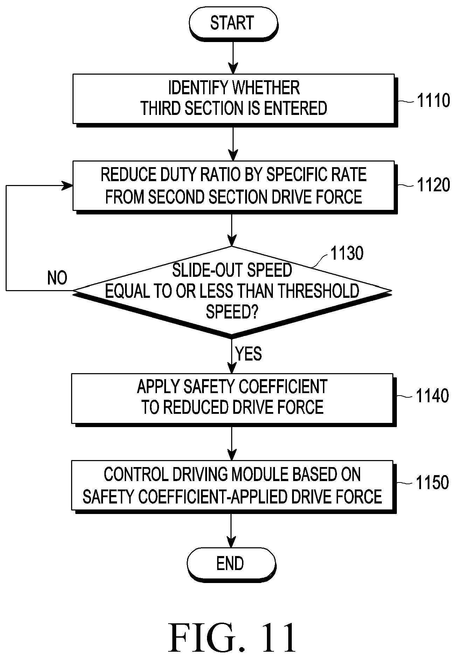

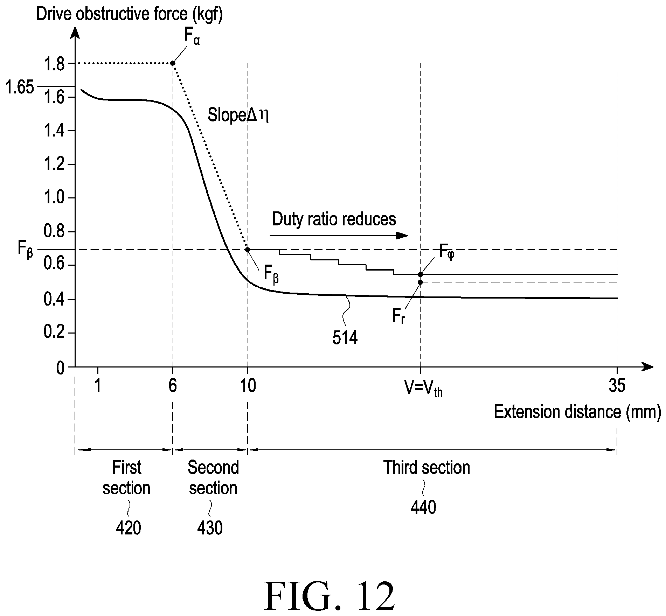

FIG. 11 is an example view illustrating a function or operation of controlling a drive force of a driving module in a third section 540 according to various embodiments of the present invention. FIG. 12 is an example view illustrating a function or operation of determining a drive force depending on whether a slide-out speed of a flexible display is a threshold speed or less in a third section 540 according to various embodiments of the present invention.

Referring to FIG. 11, the electronic device 200 according to various embodiments of the present invention may identify whether the display module 160 enters the third section 540 in operation 1110. For example, the electronic device 200 according to various embodiments of the present invention may identify whether the display module 160 slides out by the slide-out length (e.g., about 11 mm) corresponding to the second section 520 or more.

In operation 1120, when it is identified that the display module 160 enters the third section 540, the electronic device 200 according to various embodiments of the present invention may reduce the duty ratio from the second section drive force (e.g., 0.7 kgf) by a predesignated rate. As illustrated in FIG. 12, the electronic device 200 according to various embodiments of the present invention may reduce the duty ratio from the second section drive force (e.g., 0.7 kgf by a predesignated rate (e.g., 10%) until the slide-out speed of the display module 160 reaches a threshold speed Vth. The slide-out speed of the display module 160 according to various embodiments of the present invention may start to reduce from a specific position (e.g., a position where the slide-out rate of the display module 160 is 80% or more and/or where the difference between the drive force of the driving module and the drive obstructive force of the third section 540 is a predesignated value (e.g., 0.3 kgf)) according to the settings of the driving module or the user's settings.

In operation 1130, the electronic device 200 according to various embodiments of the present invention may determine whether the slide-out speed of the display module 160 is equal to or less than the threshold speed. For example, the electronic device 200 according to various embodiments of the present invention may identify the drive force of the driving module at the time when the slide-out speed of the display module 160 becomes equal to the threshold speed. Alternatively, the electronic device 200 according to various embodiments of the present invention may identify the drive force of the driving module at the time when the slide-out speed of the display module 160 first becomes smaller than the threshold speed. Since the electronic device 200 according to various embodiments of the present invention knows the slide-out length and the slide-out time of the display module 160, the electronic device 200 may calculate the slide-out speed. Alternatively, according to various embodiments of the present invention, the display module 160 may further include a sensor for detecting the slide-out speed. The electronic device 200 according to various embodiments of the present invention may stop reducing the duty ratio at the time when the slide-out speed of the display module 160 is equal to or less than the threshold speed. The electronic device 200 according to various embodiments of the present invention may identify the drive force Fr of the driving module at the time when the slide-out speed of the display module 160 is equal to or less than the threshold speed. For example, the electronic device 200 according to various embodiments of the present invention may determine the drive force of the driving module corresponding to the duty ratio at the time when the slide-out speed of the display module 160 is equal to or less than the threshold speed as the drive force Fr for applying the safety coefficient using Table 1.

In operation 1140, the electronic device 200 according to various embodiments of the present invention may apply the safety coefficient to the reduced drive force Fr when it is determined that the slide-out speed of the display module 160 is equal to or less than the threshold speed. In operation 1150, the electronic device 200 according to various embodiments of the present invention may control the driving module based on the drive force FΦ to which the safety coefficient is applied. For example, the electronic device 200 according to various embodiments of the present invention may drive the driving module until the time when the third section 540 ends according to the drive force FΦ to which the safety coefficient is applied.

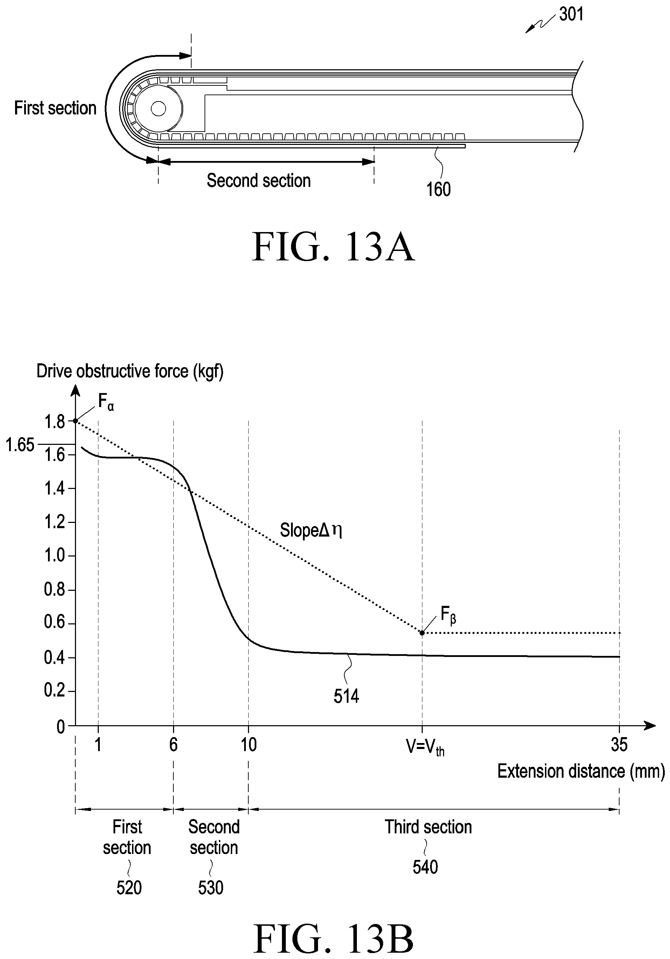

FIGS. 13A and 13B are example views illustrating a function or operation of controlling a drive force of a driving module when a plurality of sections are pre-determined as two sections according to various embodiments of the present invention.

According to another embodiment of the disclosure, as illustrated in FIG. 13A, a plurality of sections may be predetermined as two sections. In this case, in the first section 520 according to various embodiments of the present invention, the electronic device 200 according to various embodiments of the present invention may control the drive force of the driving module until the time when the first section 520 ends according to the reduction rate of the duty ratio determined based on the drive force $F\alpha$, the drive force $F_\beta$, and Equation 2. The electronic device 200 according to various embodiments of the present invention may control the driving module during the second section 530 using the drive force $F_\beta$.

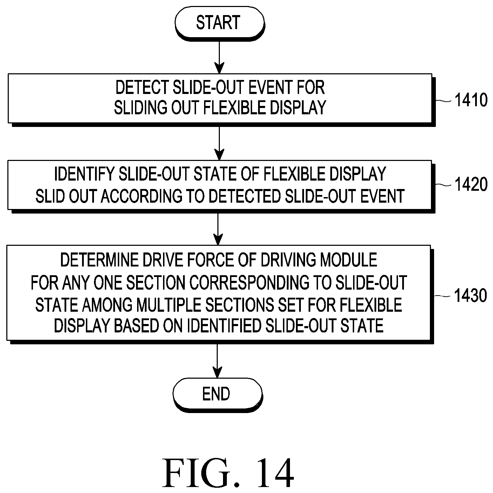

FIG. 14 is an example view illustrating a method for operating an electronic device 200 according to various embodiments of the present invention.

Referring to FIG. 14, the electronic device 200 according to various embodiments of the present invention may detect a slide-out event for sliding out the display 210 (e.g., the flexible display) in operation 1410.

In operation 1420, the electronic device 200 according to various embodiments of the present invention may identify the slide-out state of the display 210 slid out according to the detected slide-out event. For example, the electronic device 200 according to various embodiments of the present invention may determine whether the display 210 reaches the second section 530 or the third section 540.

In operation 1430, the electronic device 200 according to various embodiments of the present invention may determine the drive force of the driving module for any one section corresponding to the slide-out state among the plurality of sections (e.g., the second section 520, the second section 530, and/or the third section 540) set for the display 210, based on the identified slide-out state. For example, when it is determined that the display 210 enters the second section 530 according to the extension of the display 210, the electronic device 200 (e.g., the processor 120 of FIG. 1) according to various embodiments of the present invention may determine the drive force of the driving module according to the function or operation illustrated in FIG. 9.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the present invention, each component (e.g., a module or a program) of the above-described components may include a single entity or multiple entities. Some of the plurality of entities may be separately disposed in different components. According to various embodiments of the present invention, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments of the present invention, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200), comprising:

   a flexible display (160, 210);
   a driving module allowing at least a portion (311a) of the flexible display (160, 210) to slide out and controlling a drive force individually according to a plurality of sections (520, 530, 540) of the flexible display (160, 210), the plurality of sections (520, 530, 540) including a first section (520) and a second section (530); and
   at least one processor (120), wherein the at least one processor (120) is configured to:

   based on detection of a slide-out event for extending the flexible display (160, 210), control the driving module to expose the first section (520) with a first drive force and the second section (530) with a second drive force, wherein the first section (520) includes a portion where the flexible display (160, 210) is initially exposed outside the electronic device (101, 200) based on the slide-out event,
   wherein the first drive force is greater than the second drive force.

2. The electronic device (101, 200) of claim 1, wherein the at least one processor (120) is further configured to adjust a duty ratio while a battery (189) supplies the current to the driving module.

3. The electronic device (101, 200) of claim 1 or 2, further comprising at least one sensor configured to identify a slide-out distance of the flexible display (160, 210),
   wherein the at least one processor (120) is further configured to, upon detecting a movement of the flexible display (160, 210) using the at least one sensor, control the driving module in the first section (520) among the plurality of sections (520, 530, 540) based on the first drive force corresponding to a first duty ratio, applied to the driving module, at a time when the flexible display (160, 210) starts to move.

4. The electronic device (101, 200) of claim 3, wherein the at least one processor (120) is further configured to control the driving module in the first section (520) using a first correction drive force obtained by multiplying the first drive force by a predesignated rate.

5. The electronic device (101, 200) of claim 3, wherein the at least one processor (120) is further configured to determine the second drive force for controlling the driving module in the second section (530) subsequent to the first section (520), based on a slide-out length of the flexible display (160, 210) and the first drive force.

6. The electronic device (101, 200) of claim 5, wherein the at least one processor (120) is further configured to determine the second drive force further based on a maximum drive force in a third section (540) subsequent to the second section (530).

7. The electronic device (101, 200) of claim 6, wherein the at least one processor (120) is further configured to reduce a second duty ratio according to a predesignated rate from a second correction drive force, wherein the second correction drive force is obtained by multiplying the maximum drive force in the third section (540) by the predesignated rate.

8. The electronic device (101, 200) of claim 7, wherein the at least one processor (120) is further configured to determine whether a slide-out speed of the flexible display (160, 210) is a threshold speed or less while reducing the second duty ratio according to the predesignated rate from the second correction drive force.

9. The electronic device (101, 200) of claim 8, wherein the at least one processor (120) is further configured to, upon determining that the slide-out speed of the flexible display (160, 210) is the threshold speed or less, control the driving module based on a third drive force corresponding to a third duty ratio at a time when the slide-out speed is the threshold speed or less.

10. The electronic device (101, 200) of any one of claims 4 to 9, wherein the predesignated rate is determined according to an operation mode indicating a current state of the electronic device (101, 200), wherein the operation mode is one of a power saving mode or a normal mode.

11. A method for controlling an electronic device (101, 200), the method comprising:

based on detection of a slide-out event for extending a flexible display (160, 210) of the electronic device (101, 200), controlling a driving module of the electronic device (101, 200) to expose a first section (520) with a first drive force and a second section (530) with a second drive force, wherein the flexible display (160, 210) slides out and a drive force is controlled individually according to a plurality of sections (520, 530, 540) of the flexible display (160, 210), the plurality of sections (520, 530, 540) including the first section (520) and the second section (530), wherein the first section (520) includes a portion where the flexible display (160, 210) is initially exposed outside the electronic device (101, 200) based on the slide-out event, and wherein the first drive force is greater than the second drive force.

12. The method of claim 11, further comprising, adjusting a duty ratio while a battery (189) supplies a current to the driving module.

13. The method of claim 11 or 12, wherein the electronic device (101, 200) further includes at least one sensor configured to identify a slide-out distance of the flexible display (160, 210)., and wherein the method for controlling the electronic device (101, 200) further comprises, upon detecting a movement of the flexible display (160, 210) using the at least one sensor, controlling the driving module in the first section (520) among the plurality of sections (520, 530, 540) based on the first drive force corresponding to a first duty ratio, applied to the driving module, at a time when the flexible display (160, 210) starts to move.

14. The method of claim 13, further comprising controlling the driving module in the first section (520) using a first correction drive force obtained by multiplying the first drive force by a predesignated rate.

15. The method of claim 13, further comprising determining the second drive force for controlling the driving module in the second section (530) subsequent to the first section (520), based on a slide-out length of the flexible display (210) and the first drive force.

**Patentansprüche**

1. Elektronische Vorrichtung (101, 200), umfassend:

eine flexible Anzeige (160, 210);
ein Antriebsmodul, das ermöglicht, dass mindestens ein Abschnitt (311a) der flexiblen Anzeige (160, 210) herausgleitet, und eine Antriebskraft individuell gemäß einer Vielzahl von Abschnitten (520, 530, 540) der flexiblen Anzeige (160, 210) steuert, wobei die Vielzahl von Abschnitten (520, 530, 540) einen ersten Abschnitt (520) und einen zweiten Abschnitt (530) umfasst; und
mindestens einen Prozessor (120), wobei der mindestens eine Prozessor (120) konfiguriert ist zum:

basierend auf der Erfassung eines Herausgleitereignisses zum Ausfahren der flexiblen Anzeige (160, 210) Steuern des Antriebsmoduls, um den ersten Abschnitt (520) mit einer ersten Antriebskraft und den zweiten Abschnitt (530) mit einer zweiten Antriebskraft freizulegen,
wobei der erste Abschnitt (520) einen Abschnitt umfasst, in dem die flexible Anzeige (160, 210) anfänglich außerhalb der elektronischen Vorrichtung (101, 200) basierend auf dem Herausgleitereignis freiliegt,

wobei die erste Antriebskraft größer ist als die zweite Antriebskraft.

2. Elektronische Vorrichtung (101, 200) nach Anspruch 1, wobei der mindestens eine Prozessor (120) ferner so konfiguriert ist, dass er ein Tastverhältnis einstellt, während eine Batterie (189) den Strom an das Antriebsmodul liefert.

3. Elektronische Vorrichtung (101, 200) nach Anspruch 1 oder 2, ferner umfassend mindestens einen Sensor, der so konfiguriert ist, dass er einen Herausgleitabstand der flexiblen Anzeige (160, 210) identifiziert,
wobei der mindestens eine Prozessor (120) ferner konfiguriert ist, um beim Erfassen einer Bewegung der flexiblen Anzeige (160, 210) unter Verwendung des mindestens einen Sensors das Antriebsmodul im ersten Abschnitt (520) aus der Vielzahl von Abschnitten (520, 530, 540) basierend auf der ersten Antriebskraft zu steuern, die einem ersten Tastverhältnis entspricht, das auf das Antriebsmodul zu einem Zeitpunkt angewendet wird, zu dem die flexible Anzeige (160, 210) sich zu bewegen beginnt.

4. Elektronische Vorrichtung (101, 200) nach Anspruch 3, wobei der mindestens eine Prozessor (120) ferner konfiguriert ist, um das Antriebsmodul im ersten Abschnitt (520) unter Verwendung einer ersten Korrektur-Antriebskraft zu steuern, die durch Multiplikation der ersten Antriebskraft mit einer vorgegebenen Rate erhalten wird.

5. Elektronische Vorrichtung (101, 200) nach Anspruch 3, wobei der mindestens eine Prozessor (120) ferner konfiguriert ist, um die zweite Antriebskraft zum Steuern des Antriebsmoduls im zweiten Abschnitt (530) nach dem ersten Abschnitt (520) basierend auf einer Herausgleitlänge der flexiblen Anzeige (160, 210) und der ersten Antriebskraft zu bestimmen.

6. Elektronische Vorrichtung (101, 200) nach Anspruch 5, wobei der mindestens eine Prozessor (120) ferner konfiguriert ist, um die zweite Antriebskraft ferner basierend auf einer maximalen Antriebskraft in einem dritten Abschnitt (540) nach dem zweiten Abschnitt (530) zu bestimmen.

7. Elektronische Vorrichtung (101, 200) nach Anspruch 6, wobei der mindestens eine Prozessor (120) ferner konfiguriert ist, um ein zweites Tastverhältnis gemäß einer vorgegebenen Rate aus einer zweiten Korrektur-Antriebskraft zu reduzieren, wobei die zweite Korrektur-Antriebskraft durch Multiplikation der maximalen Antriebskraft im dritten Abschnitt (540) mit der vorgegebenen Rate erhalten wird.

8. Elektronische Vorrichtung (101, 200) nach Anspruch 7, wobei der mindestens eine Prozessor (120) ferner konfiguriert ist, um zu bestimmen, ob eine Herausgleitgeschwindigkeit der flexiblen Anzeige (160, 210) eine Schwellenwertgeschwindigkeit oder weniger ist, während er das zweite Tastverhältnis entsprechend der vorgegebenen Rate von der zweiten Korrektur-Antriebskraft reduziert.

9. Elektronische Vorrichtung (101, 200) nach Anspruch 8, wobei der mindestens eine Prozessor (120) ferner konfiguriert ist, um, nach dem Bestimmen, dass die Herausgleitgeschwindigkeit der flexiblen Anzeige (160, 210) den Schwellenwert oder weniger beträgt, das Antriebsmodul basierend auf einer dritten Antriebskraft zu steuern, die einem dritten Tastverhältnis zu einem Zeitpunkt entspricht, zu dem die Herausgleitgeschwindigkeit den Schwellenwert oder weniger beträgt.

10. Elektronische Vorrichtung (101, 200) nach einem der Ansprüche 4 bis 9, wobei die vorgegebene Rate nach einem Betriebsmodus bestimmt wird, der einen aktuellen Zustand der elektronischen Vorrichtung (101, 200) anzeigt, wobei der Betriebsmodus einer eines Energiesparmodus oder eines Normalmodus ist.

11. Verfahren zum Steuern einer elektronischen Vorrichtung (101, 200), wobei das Verfahren umfasst:

basierend auf der Erfassung eines Herausgleitereignisses zum Ausfahren einer flexiblen Anzeige (160, 210) der elektronischen Vorrichtung (101, 200), Steuern eines Anzeigemoduls der elektronischen Vorrichtung (101, 200), um einen ersten Abschnitt (520) mit einer ersten Antriebskraft und einen zweiten Abschnitt (530) mit einer zweiten Antriebskraft freizulegen, wobei die flexible Anzeige (160, 210) herausgleitet und eine Antriebskraft individuell gemäß einer Vielzahl von Abschnitten (520, 530, 540) der flexiblen Anzeige (160, 210) gesteuert wird, wobei die Vielzahl von Abschnitten (520, 530, 540) den ersten Abschnitt (520) und den zweiten Abschnitt (530) umfasst, wobei der erste Abschnitt (520) einen Abschnitt umfasst, in dem die flexible Anzeige (160, 210) anfänglich außerhalb der elektronischen Vorrichtung (101, 200) basierend auf dem Herausgleitereignis freiliegt, und wobei die erste Antriebskraft größer ist als die zweite Antriebskraft.

**12.** Verfahren nach Anspruch 11, ferner umfassend:
Einstellen eines Tastverhältnisses, während eine Batterie (189) das Antriebsmodul mit Strom versorgt.

**13.** Verfahren nach Anspruch 11 oder 12, wobei die elektronische Vorrichtung (101, 200) ferner mindestens einen Sensor umfasst, der so konfiguriert ist, dass er einen Herausgleitabstand der flexiblen Anzeige (160, 210) identifiziert, und wobei das Verfahren zum Steuern der elektronischen Vorrichtung (101, 200) ferner, beim Erfassen einer Bewegung der flexiblen Anzeige (160, 210) unter Verwendung des mindestens einen Sensors, Steuern des Antriebsmoduls im ersten Abschnitt (520) aus der Vielzahl von Abschnitten (520, 530, 540) basierend auf der ersten Antriebskraft, die einem ersten Tastverhältnis entspricht, das auf das Antriebsmodul zu einem Zeitpunkt angewendet wird, zu dem die flexible Anzeige (160, 210) sich zu bewegen beginnt, umfasst.

**14.** Verfahren nach Anspruch 13, ferner umfassend Steuern des Antriebsmoduls im ersten Abschnitt (520) unter Verwendung einer ersten Korrektur-Antriebskraft, die durch Multiplikation der ersten Antriebskraft mit einer vorgegebenen Rate erhalten wird.

**15.** Verfahren nach Anspruch 13, ferner umfassend Bestimmen der zweiten Antriebskraft zum Steuern des Antriebsmoduls im zweiten Abschnitt (530) nach dem ersten Abschnitt (520), basierend auf einer Herausgleitlänge der flexiblen Anzeige (210) und der ersten Antriebskraft.

**Revendications**

**1.** Dispositif électronique (101, 200) comprenant :

un affichage flexible (160, 210) ;
un module d'entraînement permettant à au moins une partie (311a) de l'affichage flexible (160, 210) de coulisser vers l'extérieur et commandant une force d'entraînement individuellement en fonction d'une pluralité de sections (520, 530, 540) de l'affichage flexible (160, 210), la pluralité de sections (520, 530, 540) comprenant une première section (520) et une deuxième section (530) ; et
au moins un processeur (120), dans lequel l'au moins un processeur (120) est configuré pour :

en se basant sur la détection d'un événement de coulissement vers l'extérieur pour l'extension de l'affichage flexible (160, 210), commander le module d'entraînement pour exposer la première section (520) avec une première force d'entraînement et la deuxième section (530) avec une deuxième force d'entraînement,
dans lequel la première section (520) comprend une partie où l'affichage flexible (160, 210) est initialement exposé à l'extérieur du dispositif électronique (101, 200) en se basant sur l'événement de coulissement vers l'extérieur,
dans lequel la première force d'entraînement est supérieure à la deuxième force d'entraînement.

**2.** Dispositif électronique (101, 200) de la revendication 1, dans lequel l'au moins un processeur (120) est en outre configuré pour ajuster un rapport cyclique pendant qu'une batterie (189) fournit le courant au module d'entraînement.

**3.** Dispositif électronique (101, 200) de la revendication 1 ou 2, comprenant en outre au moins un capteur configuré pour identifier une distance de coulissement vers l'extérieur de l'affichage flexible (160, 210),
dans lequel l'au moins un processeur (120) est en outre configuré pour, lors de la détection d'un mouvement de l'affichage flexible (160, 210) à l'aide de l'au moins un capteur, commander le module d'entraînement dans la première section (520) parmi la pluralité de sections (520, 530, 540) sur la base de la première force d'entraînement correspondant à un premier rapport cyclique, appliquée au module d'entraînement, à un moment où l'affichage flexible (160, 210) commence à se déplacer.

**4.** Dispositif électronique (101, 200) de la revendication 3, dans lequel l'au moins un processeur (120) est en outre configuré pour commander le module d'entraînement dans la première section (520) à l'aide d'une première force d'entraînement de correction obtenue en multipliant la première force d'entraînement par un taux prédéfini.

**5.** Dispositif électronique (101, 200) de la revendication 3, dans lequel l'au moins un processeur (120) est en outre configuré pour déterminer la deuxième force d'entraînement pour commander le module d'entraînement dans la deuxième section (530) après la première section (520), sur la base d'une longueur de coulissement vers l'extérieur de l'affichage flexible (160, 210) et de la première force d'entraînement.

**EP 4 439 228 B1**

6. Dispositif électronique (101 , 200) de la revendication 5, dans lequel l'au moins un processeur (120) est en outre configuré pour déterminer la deuxième force d'entraînement en se basant sur une force d'entraînement maximale dans une troisième section (540) après la deuxième section (530).

7. Dispositif électronique (101, 200) de la revendication 6, dans lequel l'au moins un processeur (120) est en outre configuré pour réduire un deuxième rapport cyclique selon un taux prédéfini à partir d'une deuxième force d'entraînement de correction, la deuxième force d'entraînement de correction étant obtenue en multipliant la force d'entraînement maximale dans la troisième section (540) par le taux prédéfini.

8. Dispositif électronique (101, 200) de la revendication 7, dans lequel l'au moins un processeur (120) est en outre configuré pour déterminer si une vitesse de coulissement vers l'extérieur de l'affichage flexible (160, 210) est une vitesse seuil ou inférieure tout en réduisant le second rapport cyclique selon la vitesse prédéfinie à partir de la deuxième force d'entraînement de correction.

9. Dispositif électronique (101, 200) de la revendication 8, dans lequel l'au moins un processeur (120) est en outre configuré pour, après avoir déterminé que la vitesse de coulissement vers l'extérieur de l'affichage flexible (160, 210) est la vitesse de seuil ou moins, commander le module d'entraînement sur la base d'une troisième force d'entraînement correspondant à un troisième rapport cyclique à un moment où l'affichage flexible (160, 210) est la vitesse de seuil ou moins.

10. Dispositif électronique (101, 200) de l'une des revendications 4 à 9, dans lequel le taux prédéfini est déterminé en fonction d'un mode de fonctionnement indiquant un état actuel du dispositif électronique (101, 200), dans lequel le mode de fonctionnement est l'un d'un mode d'économie d'énergie ou d'un mode normal.

11. Procédé de commande d'un dispositif électronique (101, 200), le procédé comprenant :

en se basant sur la détection d'un événement de coulissement vers l'extérieur d'un affichage flexible (160, 210) du dispositif électronique (101, 200), commander un module d'entraînement du dispositif électronique (101, 200) pour exposer une première section (520) avec une première force d'entraînement et une deuxième section (530) avec une deuxième force d'entraînement, dans lequel l'affichage flexible (160, 210) coulisse vers l'extérieur et une force d'entraînement est commandée individuellement en fonction d'une pluralité de sections (520, 530, 540) de l'affichage flexible (160, 210), la pluralité de sections (520, 530, 540) comprenant la première section (520) et la deuxième section (530),
dans lequel la première section (520) comprend une partie où l'affichage flexible (160, 210) est initialement exposé à l'extérieur du dispositif électronique (101, 200) en se basant sur l'événement de coulissement vers l'extérieur, et
dans lequel la première force d'entraînement est supérieure à la deuxième force d'entraînement.

12. Procédé de la revendication 11, comprenant en outre,
ajuster un rapport cyclique pendant qu'une batterie (189) fournit un courant au module d'entraînement.

13. Procédé de la revendication 11 ou 12, dans lequel le dispositif électronique (101, 200) comprend en outre au moins un capteur configuré pour identifier une distance de coulissement vers l'extérieur de l'affichage flexible (160, 210), et dans lequel le procédé de commande du dispositif électronique (101, 200) comprend en outre, lors de la détection d'un mouvement de l'affichage flexible (160, 210) à l'aide de l'au moins un capteur, commander le module d'entraînement dans la première section (520) parmi la pluralité de sections (520, 530, 540) sur la base de la première force d'entraînement correspondant à un premier rapport cyclique, appliquée au module d'entraînement, à un moment où l'affichage flexible (160, 210) commence à se déplacer.

14. Procédé de la revendication 13, comprenant en outre commander le module d'entraînement dans la première section (520) à l'aide d'une première force d'entraînement de correction obtenue en multipliant la première force d'entraînement par un taux prédéfini.

15. Procédé de la revendication 13, comprenant en outre déterminer la deuxième force d'entraînement pour commander le module d'entraînement dans la deuxième section (530) après la première section (520), en se basant sur une longueur de coulissement vers l'extérieur de l'affichage flexible (210) et la première force d'entraînement.

**19**

FIG. 1

ELECTRONIC DEVICE 101

INPUT MODULE 150

SOUND OUTPUT MODULE 155

DISPLAY MODULE 160

MEMORY 130

MEMORY 132
VOLATILE MEMORY 132
NON-VOLATILE MEMORY 134
INTERNAL MEMORY 136
EXTERNAL MEMORY 138

BATTERY 189

PROCESSOR 120
MAIN PROCESSOR 121
AUXILIARY PROCESSOR 123

POWER MANAGEMENT MODULE 188

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

CONNECTING TERMINAL 178

HAPTIC MODULE 179

CAMERA MODULE 180

PROGRAM 140
APPLICATION 146
MIDDLEWARE 144
OPERATING SYSTEM 142

100

199 SECOND NETWORK

198 FIRST NETWORK

ELECTRONIC DEVICE 104

ELECTRONIC DEVICE 102

SERVER 108

EP 4 439 228 B1

☐ EXPOSED AREA
▒ SLID-IN AREA

200

| ELECTRONIC DEVICE |
|---|
| ▒ DISPLAY |

210

TRANSFORMING
EVENT
⟷

200

| ELECTRONIC DEVICE |
|---|
| DISPLAY |

210

FIG. 2

FIG. 3A

EP 4 439 228 B1

FIG. 3B

23

FIG. 3C

## FIG. 3D

START

DETECT EVENT FOR SLIDING
OUT FLEXIBLE DISPLAY — 410

DETERMINE, IN DIFFERENT MANNER, DRIVE FORCE
OF DRIVING MODULE FOR EACH OF MULTIPLE
PREDETERMINED SECTIONS
BASED ON DETECTED EVENT — 420

SLIDE OUT FLEXIBLE DISPLAY
BASED ON DETERMINED DRIVE FORCE — 430

END

# FIG. 4

FIG. 5

520

First section

Second section

530

Third section

540

First section

301

160

610

## FIG. 6A

540

530 520

Third section

Second section First section

301

160

610

## FIG. 6B

START

DETECT EVENT FOR SLIDING
OUT FLEXIBLE DISPLAY — 710

INCREASE DUTY RATIO OF DRIVING MODULE — 720

730
FLEXIBLE DISPLAY SLID OUT?
NO

YES

CONTROL DRIVING MODULE TO OUTPUT
DRIVE FORCE WITH SAFETY COEFFICIENT
APPLIED TO MINIMUM DRIVE FORCE — 740

750
END POINT
OF FIRST SECTION REACHED?
NO

YES

CALCULATE DRIVE FORCE TO
BE APPLIED TO SECOND SECTION — 760

END

FIG. 7

Duty ratio 5% | Duty ratio 30% | Duty ratio 50% | Duty ratio 100%

100

0

100

50

0

(%)

Motor current

# FIG. 8A

FIG. 8B

FIG. 8C

START

IDENTIFY WHETHER
SECOND SECTION IS ENTERED — 910

DETERMINE REDUCTION RATE OF DUTY
RATIO BASED ON DRIVE FORCE OF
FIRST SECTION AND MAXIMUM DRIVE
OBSTRUCTIVE FORCE OF THIRD SECTION — 920

REDUCE DUTY RATIO OF DRIVING MODULE
UNTIL REACHING MAXIMUM DRIVE
OBSTRUCTIVE FORCE OF THIRD SECTION
ACCORDING TO DETERMINED REDUCTION RATE — 930

940

NO
END POINT OF
SECOND SECTION REACHED?

YES

CALCULATE DRIVE FORCE TO
BE APPLIED TO THIRD SECTION — 950

END

FIG. 9

FIG. 10A

FIG. 10B

FIG. 10C

START

IDENTIFY WHETHER
THIRD SECTION IS ENTERED ⌐ 1110

REDUCE DUTY RATIO BY SPECIFIC RATE
FROM SECOND SECTION DRIVE FORCE ⌐ 1120

SLIDE-OUT SPEED
EQUAL TO OR LESS THAN THRESHOLD
SPEED? ⌐ 1130

NO

YES

APPLY SAFETY COEFFICIENT
TO REDUCED DRIVE FORCE ⌐ 1140

CONTROL DRIVING MODULE BASED ON
SAFETY COEFFICIENT-APPLIED DRIVE FORCE ⌐ 1150

END

FIG. 11

FIG. 12

First section

Second section

160

FIG. 13A

Drive obstructive force (kgf)

$F_\alpha$

1.8

1.65

1.6

1.4

1.2

Slope$\Delta\eta$

1.0

0.8

0.6

$F_\beta$

0.4

0.2

514

0

1   6   10   $V=V_{th}$   35

Extension distance (mm)

First section
520

Second section
530

Third section
540

FIG. 13B

START

DETECT SLIDE-OUT EVENT FOR
SLIDING OUT FLEXIBLE DISPLAY — 1410

IDENTIFY SLIDE-OUT STATE OF FLEXIBLE DISPLAY
SLID OUT ACCORDING TO DETECTED SLIDE-OUT EVENT — 1420

DETERMINE DRIVE FORCE OF DRIVING MODULE
FOR ANY ONE SECTION CORRESPONDING TO SLIDE-OUT
STATE AMONG MULTIPLE SECTIONS SET FOR FLEXIBLE
DISPLAY BASED ON IDENTIFIED SLIDE-OUT STATE — 1430

END

# FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021208552 A